# EUROPEAN PATENT APPLICATION

(11) **EP 1 406 182 A1**
(43) Date of publication of application: **07.04.2004**
(21) Application number: 02022155.2
(22) Date of filing: 02.10.2002
(51) Int. Cl.: G06F 17/30, H04M 1/247

(54) **Method and information display system for automatically providing technical information of a computerized terminal**

(71) Applicant: WirTek ApS, 9220 Aalborg (DK)
(72) Inventor: Hansen, Thomas Jesper, DK-9000 Aalborg (DK)
(74) Representative: Tergau & Pohl Patentanwälte

(57) **Abstract**

For automatically providing technical information (2) of a computerized terminal (4), especially of a mobile phone, to a user (6), a method comprising the steps of:
- in dependence of input data (I), identifying one of a multitude of terminal types (4),
- in dependence of the identified terminal (4), identifying one of a multitude of standardised operations (F1 to Fn),
- in dependence of the operation (F1 to Fn) as identified, loading and displaying a sequence of steps (SQ1 to SQm, SS1 to SSz) characteristic for the execution of the identified operation (F1 to Fn) on the identified terminal (4),
- for a number of steps (SQ1 to SQm, SS1 to SSz), loading terminal-specific information (TM).

## Description

### Field of the invention

The present invention relates to a method for automatically providing technical information, such as configuration data or user guidelines, of a computerized terminal, especially of a mobile phone, to a user, for instance to an end-user or support center personal. Furthermore, the present invention relates to an information display system for execution of such method.

### Background of the invention

A computerized terminal is any electronic device for data processing or data transfer with an interface for entering information or input data into an integrated processor or for receiving and displaying information to the user of the terminal. For instance, such computerized terminals may be mobile hand-held computers, such as so-called palm tops, or mobile phones.

In recent developments, due to a large variety of available communication services and standards, these computerized terminals tend to become more and more complex. In addition, the number of individual terminal types or so-called models of these is growing together with the number of functions and various formats that individual terminals provide. Consequently, with the growing number of terminal models and available functions the use of a specific computerized terminal - in case of a mobile phone available from a variety of suppliers - by support personal or by an end-user is becoming more and more complicated. In other words, the mobile phone has evolved from a simple wireless communication device to a complex handheld computer with a wide range of features and with the result that more and more of these features require the users to configure or personalize their mobile phones. For instance, the buyer of a new computerized terminal typically has to configure his computerized terminal, e.g. a mobile phone or palm top, to use working features such as a calendar function, network functions or WAP functions (= wireless application protocol, that means a standardised mobile interactive wireless data service). To configure but also to use such complex features like WAP and e-mail on a mobile phone often requires a very skilled user with insight for instance into computer networking.

Consequently, in order to facilitate use of these more and more complex systems, a convenient and easy-to-use manual or guideline for each system type is highly desirable. Due to the complexity of the systems, hard copies of such instruction materials tend to be not practical, and typically guidelines are provided in electronic form. However, current instructions about the configuration or using of features on a mobile phone or a palm top are typically not interactive. If the user provides an input different from a predetermined given or configured input, this may lead to system failure or false handling since the user may likely be unaware that the provided input was incorrect. Should false handling occur, the user only knows that the provided input was incorrect, but still is not assisted in determining what the expected or correct user input is. Another fact is that using the features once configured is sometimes difficult because of the limited input facilities on a mobile phone.

Furthermore, due to the growing number of terminal types and functions, services to support the end-user and, more particularly, customer support services tend to become more and more popular. These services typically cover a wide range of mobile phones from various manufacturers. In addition to this, the services cover a large number of usage scenarios (= procedures or functions) for each phone, and - in regard of convenience for the customer - the scenarios are held available in a number of different languages. This results in a very large number of user guidelines, that for convenient service must be covered by user's manuals or guidelines. For example, if instructions for 200 scenarios (procedures or functions) in 30 types of mobile phones are provided in 4 languages, 24.000 user guidelines must be held available. This multitude of scenarios are currently dealt by hand. In view of the potentially enormous effort for holding available the necessary amount of data, many support centers specify on one series or one manufacturer of terminal types only, and hence are not able to offer complete coverage for their customers.

Therefore, it is an object of the invention to provide a simplified and particularly versatile method for automatically providing technical information of a computerized terminal, especially of a mobile phone, to one or more users.

### Summary of the Invention

The invention is based on the concept that proper handling of the enormous amount of data requires a particularly structurized system. An approach for structurization is provided in recognition of the fact that, even though various types or models of terminals may deviate from each other significantly with respect to technical details, the functions or procedures they perform typically are customer-oriented and hence are similar even for different individual types or models. Consequently, these common functions or procedures are chosen as the basis for standardization of processes that are applicable to all types or models of terminals. In dependence of the kind of the standardised operation, some of these operations may be terminal independent, other may be terminal dependent. These standardised operations or procedures areheld available in a suitable database, and on demand, i. e. when requested by a user or an operator, a relevant sequence of steps is loaded and is combined with terminal-specific technical information in order to yield the complete information as needed in the guidelines or manuals.

Therefore, in the present invention the information is structured in two different data formats. The first data format covers process-oriented information, which in a standardised way applies to a multitude of different terminal types. In dependence of the relevant standardised operations, said process-oriented information is terminal-independent or terminal-dependent. For instance, all types of terminals typically perform operations such as "Make a call" or "Delete a number", but only a number of types of terminals perform operations such as "WAP set-up" or "SMS set-up". These operations, which are common to all various types of terminals, are terminal-independent and standardised by modelled data. The other operations are terminal-dependent and also standardised by modelled data. These standardised operations (also called scenarios) are identified, structured and stored and if required are loaded.

The second data format covers terminal-specific data, for instance number and kind of keys, number and kind of lists, menus or edits of one of the terminal types (also called terminal models). These second individual terminal-specific data - specific data for each kind of terminal type - are stored and if required are loaded. On the basis of these two data formats, individual manuals or guidelines or parts thereof are generated automatically and fast based upon the standardisedstandardised operations or scenarios as a sequence of steps characteristic for the execution of the identified function. On demand, in each step the standardised operations and the terminal-specific information of the selected terminal type are loaded to supplement and complete the information on display.

Such combinations of terminal-specific information with standardisedstandardised operations realized for example as software models may describe user interface properties of one of the terminal types dependent from terminal-specific information as well as steps to perform the various tasks of one scenario which is independent from terminal-specific information. With other words: The standardised modelled operations or scenarios describe the behavior or execution of one of the terminal's user interface relevant to the identified operation. This allows that the technical information, especially the instruction file, may be expressed in a relatively simple way at a high level of abstraction, for instance abstract data models of WAP functions, e-mail functions, or calendar-functions independent or dependent from the specific terminal, but independent from terminal-specific data. Such open architecture allows the system to be integrated with existing service support center solutions. Furthermore, it allows mobile service centers to be constructed as in a terminal-independent manner as possible, because terminal-specific data or information is separately handled by generating into each single step.

In more detail to the present invention, due to the combined use of the two data sources, guidelines on how to perform the selected function in the selected terminal type may be generated in a simple, step-by-step way, providing detailed information for each step involved in the respective sequence. Within this sequence, the display of information may be controlled, e. g. in form of detailed instructions for usage or configuration. In this system, the user or operator may be guided through the selected scenario step by step or alternatively triggered by given time sequences. In the system, the user or operator preferably is guided based on structurized menues, e. g. by offering a selection of available scenarios and/or available individual terminal models. After selection of the scenario that is to be covered, and after selection of the terminal model in question, the user or operator may be guided through the relevant information based upon menues, particularly in form of subsequent steps each of which is completed by technical information of the selected model. Within a selected function or a selected scenario, in a first step a sequence of steps associated with the selected scenario is displayed on screen, and on selection of one of these steps, detailed technical information, such as sequence of keys, is loaded and displayed.

For example, in an operation or scenario menue, a WAP function (e. g. "Set up WAP" or "use WAP") might be selected by the user. Depending on the selected function and the selected terminal, a standardised sequence of steps necessary to perform this operation is identified. Starting from this standardised sequence of steps, stored information characteristic for the individual terminal in question is used to generate an individualized sequence of steps that is to be performed to execute the selected function with the selected terminal. This individual sequence of steps to be performed (e. g. a sequence of 12 steps for the set-up function or 32 steps for the use function) is displayed to the user. If needed or available, individual steps within this individual sequence of steps are supplemented and completed by terminal specific technical data such as key codes or design rules. In particular, for the selected terminal, the individual step may be displayed as a sequence of keys that need to be pressed in order to execute the respective step. The data output may be carried out in text form or as a graphic animation. Both the standardised sequence of steps and the individualized sequence of steps or terminal-specific operations may be put on display on a time triggered or an interactive basis. In the time triggered mode, the information characteristic for each individual step is displayed in a continuous animation, providing for sufficient time intervals between adjacent steps in order to allow for the user follow up with the animated display.

In a particularly versatile mode of the invention, preferably a terminal independent i/o- interface is used. This independent interface provides the technical information to one or more users or operators in an interactive manner that provides actual responses to the actual user inputs during the generating of the sequence of steps. Therefore, the method as well as the information display system represent a self-care system with a common terminal independent interface monitored and controlled by a user or an operator. This independent interface gives terminal owner or service support personal their own personal interface or a standardised interface where they can interactively use and/or configure their or the selected terminal. For instance, in dependence of demand at the independent interface service settings can be transmitted directly over a mobile network to the terminal. Alternatively, the information display system can draw in a simulated manner on the independent interface such like a training module the step-by-step instructions - how to manually configure or use the terminal, e.g. the mobile phone or palm top - in textual form or as a graphical animation.

In further special aspect of the invention, safe and easy operation and guidance for the user in the sequence of steps is ensured by a number of backup points (also called stable point or check points), which are provided in the sequence of steps for a number of selected steps. Preferably, during execution of the sequence of steps, the passing of backup points is monitored by the system such that in all cases information about the backup point that during execution was passed last is held available. If in this system, a user looses orientation with respect to the potentially large amount of information on display, the information display system provides a user-controlled reset optionand more particularly, a so-called "panic button" or "I am lost"-button, which when pressed will cause to reset the execution of the sequence of steps to the most recent backup point that was properly passed on user demand.

A further aspect of the present invention relates to use of the information display system for providing support services and more particular, to integrate the information display system in service center solutions of a support center, such as call center of a supplier hotline. According to this aspect, the information display system may comprise a host computer linked with a client computer and receiving input from the client computer to execute the sequence of steps in dependence of the identified terminal type and the identified scenario. Furthermore, particularly when the information display system is used in e-learning solutions or in support services, the standardised sequence of steps is designed or generated such that regardless of user or operator inputs, the user's or operator's terminal model or computer typically cannot be crashed by the user or operator inputs.

Among others, a particular advantage obtainable with the invention is that by separate identification, processing and storing of terminal-independent or terminal-dependent sequence-modelled data on the one hand side, such as standardisedstandardised operations or processes, and terminal-specific information on the other hand side, such as technical details or design specifics of individual terminal types, a relatively simple and straightforward generation of a large variety of detailed user information is possible. In particular, for individual terminal types, specific sequences of steps characteristic for the execution of the selected standard function in the selected terminal are made available. Based upon these terminal specific sequences of steps, detailed manuals or user guidelines may be generated on demand by combination with terminal specific technical information and without the necessity to continuously hold available a large amount of various individual scenarios. The inclusion of further, user specific options such as language preferences or country specific background information may render the detailed information displayed to the user even more versatile.

### Brief Description of the Drawings

The present invention is illustrated by way of example in the figures of the accompanying drawings. Identical reference numerals in the drawings identify to identical elements.
- FIG 1 to 3: illustrate several examples for generalized schedules of an algorithm of the present invention, and
- FIG 4: illustrates an exemplary hardware platform for certain aspects of various embodiments of the present invention.

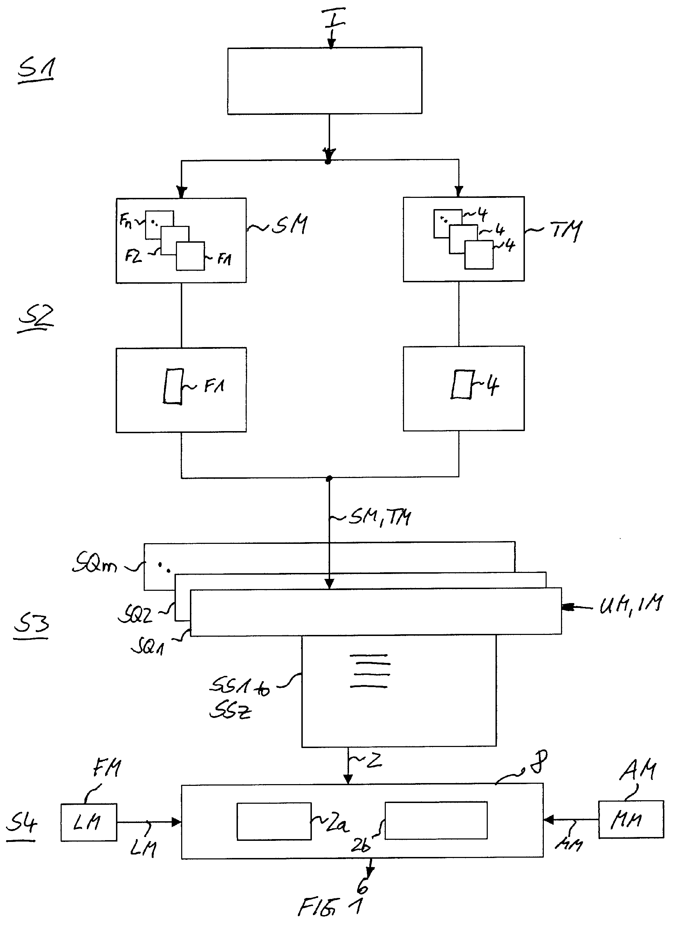

Figure 1 shows a block diagram that illustrates a particularly structurized flowchart 1 for automatically providing technical information 2, such as user and/or configuration guidelines, of a computerized terminal 4 to a user 6. A computerized terminal 4 may be any electronic device for data processing or data transfer with an interface for entering information or input data and/or for receiving and displaying information to the user 6 of the terminal 4. In the following description, for purposes of explanation, a mobile phone is used as an example of the computerized terminal 4 to provide a thorough understanding of the present invention.

The flowchart 1 comprises for a various types or models of terminals 4, such as mobile phones from a variety of suppliers, a number of terminal-dependent or terminal-independent standardisedoperations F1 to Fn, such as "WAP functions", "Network functions", "Call-by-call functions". These standardised operations F1 to Fn are common functions F, also called scenarios, that are applicable to all types or models of terminals 4. Both, the standardised operations F1 to Fn and the various types of terminals 4 are standardised by modelled data. These modelled date are provided in separate data formats to identified, structured and stored the standardised operations F1 to Fn as sequence models SM and the various types of terminals 4 as terminal models TM. In particular, the standardised operations F1 to Fn or scenarios based on the sequence models SM are stored as terminal-independent or terminal-dependent modelled data for a number of terminal procedures. For each type of terminal 4, the terminal models TM are stored as terminal-specific modelled data for a number of terminal-specific components, structures and/or languages.

For identifying the relevant standardised operation F1 to Fn and relevant terminal-specific data TM, in a first step S1 one of the various types of terminals 4 is identified in dependence of input-data I. Based on terminal-specific information, those standardised operations F1 to Fn are identified that are available on the selected terminal 4. For example, individual types of mobile phones may offer certain features that are not provided by other types of mobile phones, and this terminal-dependent discrepancy is reflected by the terminal-dependent selection of available standardised operations F1 to Fn.

As the next step S2, in dependence of the selected type of terminal 4 one of a multitude of standardised operations F1 to Fn is identified. For example, in a function or scenario menu a terminal 4 (e.g. a given model of one of mobile phones of one of suppliers) and an operation F1, F2 or Fn (e.g. "Make a call") might be selected by a user 6. In dependence of the selected terminal 4, the relevant standardazied operation F1 to Fn may be structured terminal-independent or terminal-dependent. In the next step S3, in dependence of the identified operation F1 or Fn and in dependence of the selected terminal 4, a sequence of steps SQ1 to SQm characteristic for the execution of the identified operation F1 or Fn is loaded or generated on the basis of said both data formats - loaded terminal-independent or terminal-dependent modelled data SM (shortly called sequence model SM) and terminal-specific modelled data TM (shortly called terminal model TM). In particular, within this sequence of steps SQ1 to SQm based on the sequence model SM for each step terminal-specific information TM is loaded, particularly if needed or available, individual steps within this individual sequence of steps SQ1 to SQm are supplemented and completed in form of a subsequent steps SS1 to SSz. The subsequent steps SS1 to SSz for the selected terminal 4 may be comprise a sequence of keys or operations that need to be pressed in order to execute the respective step.

Additional to loading terminal-specific data or information TM in each step, user-specific information UM and/or interface-specific information IM may also be loaded in each step of the functional sequence of steps SQ1 to SQm as well as of the terminal-specific sequence of steps SS1 to SSz. As an example for user-specific information UM, language settings, view settings and/or time settings are loaded. As an example for interface-specific information IM, online or offline settings are loaded.

In step S4, as a result, the generated sequence of steps SQ1 to SQm and if needed or available the generated subsequent steps SS1 to SSz (also called steps of terminal-specific operations) are displayed to the user 6. Relevant technical information 2 may also be displayed. The output of the sequence of steps SQ1 to SQm, especially of the subsequent steps SS1 to SSz (= steps of operations), as technical information 2 may be carried out in text form 2a and/or as technical information 2 as a graphic animation 2b. To display the technical information 2, such as user and/or configuration guidelines, in text form 2a or as an animation 2b, as a third and fourth data format, a text model FM and an animation model AM are created and stored. The text model FM defines the textual contents of a particular guide in a particular language. The generation of the text model FM is based on two data sources - on the sequence model SM and a language template LM.

Furthermore, in dependence of user-specific information UM, the displaying of said animation sequence 2b is synchronized with displaying of said text 2a. In an example of subsequent steps SS1 to SSz which represents the terminal-specific sequence of keys or operations for entering a voice mail dial-in number, within these subsequent steps SS1 to SSz the technical information 2 in text form 2a describes in detail step-by-step (e.g. as a list) which key is to be pressed and is synchronized with the technical information 2 displayed as a graphic animation sequence 2b, which shows the visual representation of this list step-by-step.

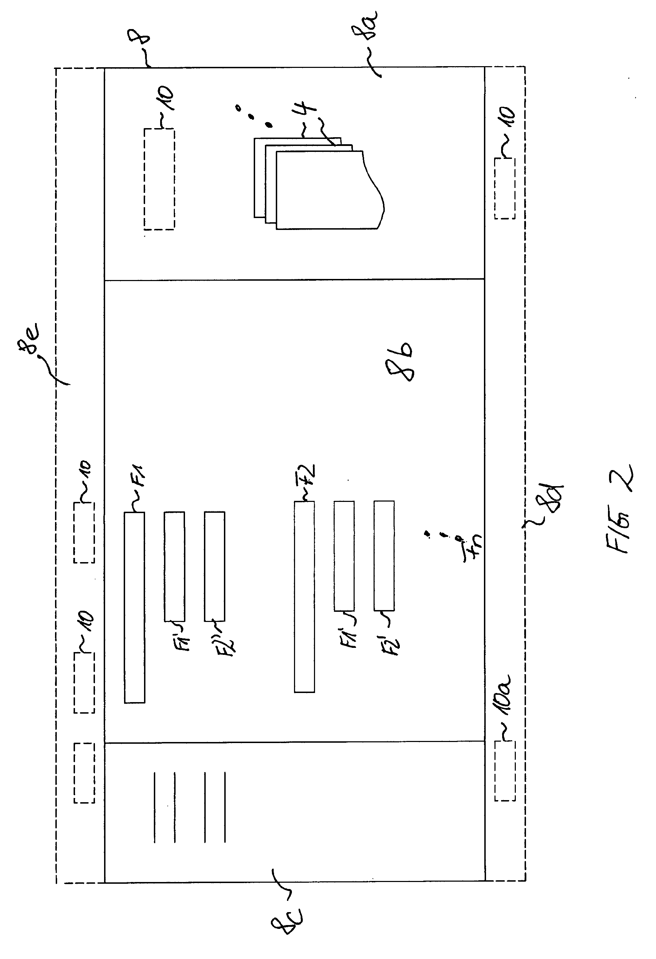

Figure 2 shows an example for a terminal-independent input/output interface 8 (shortly called i/o interface 8) for provide the technical information 2 to one or more users 6 or operators in an interactive manner. For selection of one of the various models of terminals 4 and one of the standardised operations F1 to Fn, the i/o interface 8 is divided into different i/o parts 8a to 8e. The different i/o parts 8a to 8e are used for identifying a request of the user 6 or an operator and/or for displaying technical information 2 or in dependence of demand at the i/o interface 8 for transmitting service settings directly over a mobile network to the terminal 4.

In more detail, for example, one of the i/o part 8a is structured for selecting one of the various models of terminals 4. Another i/o part 8b is structured for selecting one of the standardasid operations F1 to Fn. In dependence of the structure or model of the standardasid operations F1 to Fn, the represented scenarios may be displayed in a hierarchical structure, e.g. in a operation or scenario menue. For instance, various higher-level operations F1 to Fn, such as a "WAP function" or "Answer a call", may be comprised various lower-level operation F1 to Fn, such as "WAP set-up", "WAP use" or "Setup answer", "Listen answer". Furthermore, another i/o part 8c is structured for selecting or settings general functions or parameters, such as relevant links to the selected terminal 4. For example, if a terminal 4 from a given supplier is selected the link is referred to the homepage of the said supplier. In dependence of the structure of the i/o interface 8, additional i/o parts 8e and 8d may be structured for control the displayed functions F1 to Fn and/or for selecting parameters, such as language of the displayed data, and/or for contact the author of the i/o interface 8 for support. For input user-specific parameters UM and/or interface-specific parameter IM, said control i/o parts 8d and 8e comprise control buttons 10 for input information or a command or a request.

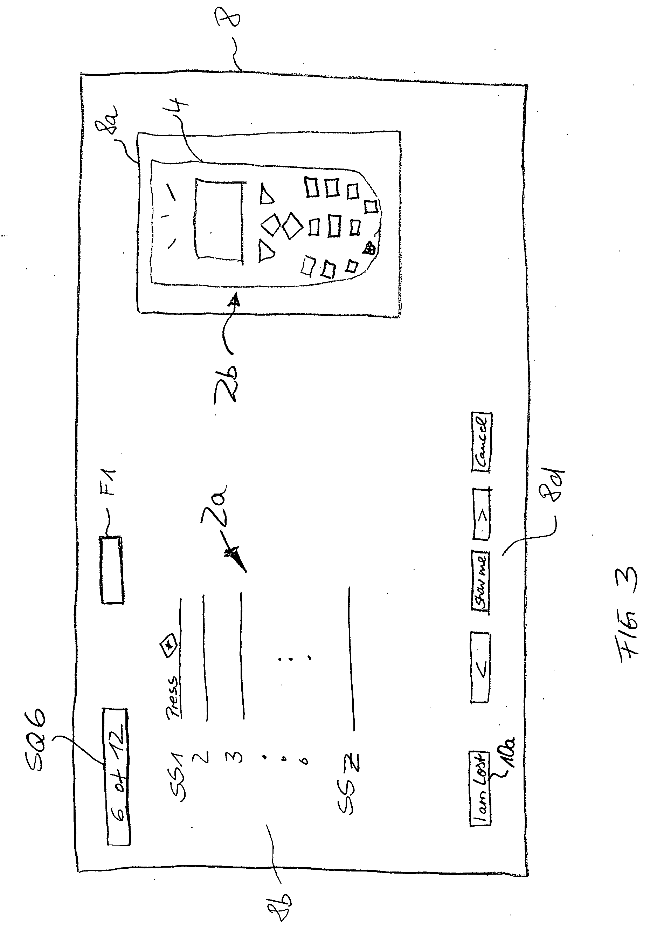

Figure 3 shows an example of a display of the i/o interface 8 for a selected standardised operation F1 and more particularly, the sixth step SQ6 of the whole represented sequence of 12 steps SQ1 to SQ12 for an identified terminal 4. The standardised step SQ6 of the selected sequence of steps SQ1 to SQ12 comprises subsequent steps SS1 to SSz displayed to the user 6 as technical information 2. The output of the subsequent steps SS1 to SSz is carried out as said technical information 2 in text form 2a and as a graphic animation 2b in different i/o parts 8b and 8a. Both the standardazid sequence of steps SQ1 to SQ12 and the individual sequence of steps SS1 to SSz may be put on display on a time triggered basis or an interactive basis. In the time triggered mode, the technical information 2 characteristic for each individual step SS1 to SSz is displayed in a continuous animation 2b, providing for sufficient time intervals between adjacent steps in order to allow for the user 6 follow up with the animated display in i/o part 8a. In the interactive mode, the i/o interface 8 provides the technical information 2 to the user 6, for instance an end-user or an operator, in an interactive manner that provides actual responses to the actual user 6 inputs I during the generating of the sequence of steps SS1 to SSz or SQ1 to SQ12. For such an individual guidance through the functional sequence of steps SQ 1 to SQ12 and the terminal-specific subsequent of steps SS1 to SSz, control buttons 10, such as "back-button", "next-button", "show-me-button", "cancel-button", are implemented in the control i/o part 8d of the i/o interface 8.

Additional to the controlled guidance through the sequence of steps SQ1 to SQ12 and SS1 to SSz, a user-controlled reset option 10a in form of a virtual button is implemented to reset the execution of the relevant sequence of steps SQ1 to SQ12 or SS1 to SSz to a backup point. For such a reset function, in said sequence of steps SQ1 to SQ12 or SS1 to SSz for a number of selected steps SQ1 or SQm or SS1 or SSz a number of backup points (also called stable point or checkpoint) is provided. During the execution of said sequence of steps SQ1 to SQ12 or SS1 to SSz, the passing of said backup points is monitored, so that on an input failure or a system failure, the execution of the sequence of steps SQ1 to SQ12 or SS1 to SSz is reset to the most recent backup point that was properly passed. Alternatively, on an individual user command by press the user-controlled reset option 10a, the execution of the sequence of steps SQ1 to SQ12 or SS1 to SSz is also reset to the most recent backup point that was properly passed. This function ensures, that the user 6 of the terminal 4 does not lose the overview, while carrying out the sequence of steps SQ1 to SQ12 or SS1 to SSz. If a user 4 gets lost, a user command and more particularly, the button 10a, so-called "panic button" or "I am lost"-button may be activated, which when pressed will cause to reset the execution of the sequence of steps SQ1 to SQ12 or SS1 to SSz to the most recent backup point that was properly passed on user demand.

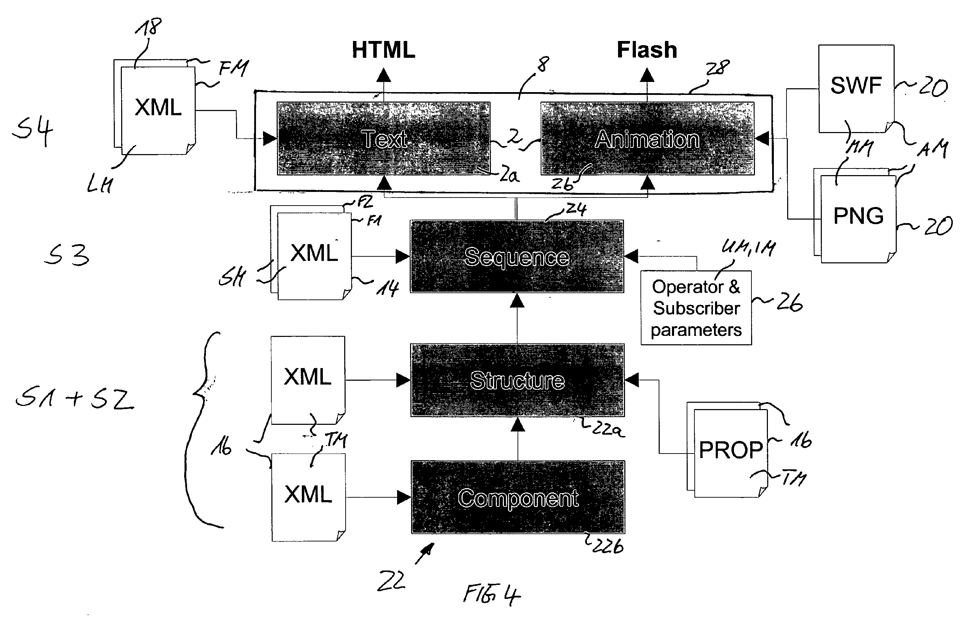

Figure 4 shows as an exemplary hardware platform for certain aspects of various embodiments of the present invention an information display system 12. The process of said information display system 12 is described as follows. The information display system 12 generates the technical information 2 in four steps S1 to S4. Each step S1 to S4 results in a data model being identified, structured and stored as mentioned before. These data models are the terminal model TM, the sequence model SM, the text model FM and the animation model AM. For storing and identifying the relevant data models, the information display system 12 comprises a plurality of data-bases with following structure:
for generating a sequence of steps SQ1 to SQm or SS1 to SSz:
   ○ a first data-base 14 for storing a multitude of standardised operations F1 to Fn as sequence models SM,
   ○ a second data-base 16 for storing terminal-specific information as terminal models TM for the various types of terminals 4, and additionally for displaying the sequence of steps SQ1 to SQm or SS1 to SSz, and
additionally for displaying the sequence of steps SQ1 to SQm or SS1 to SSz:
   ○ a third data-base 18 for storing the text model FM and
   ○ a fourth data-base 20 for storing the animation model AM.

For example, for the automatic generation of technical information 2 of a mobile phone, the information display system 12 comprises an input module 22 for identifying one of said terminal type 4 and one of said standardised operations F1 to Fn. Said input module 22 may comprised two sub-modules 22a, 22b for identifying different terminal models TM for the selected terminal type 4. The relevant terminal models TM are normally stored in the second data-base 16 - one data-base per type or model of terminals 4. To simplify the individual complex structure and function of one type of terminal 4, the second data-base 16 consists of three parts or modules, such as sub-data-bases which are connected with said input modules 22a, 22b. In detail, the terminal model TM defines the user interface (shortly called UI) behavior of the specific terminal 4. The terminal model TM consists of the following three parts:
- a UI component definition,
- a UI structure definition, and
- a UI language definition.

Said UI component definition defines a set of building blocks (components) that are used to construct the selected model of terminal 4. For example, such building blocks are menues, selection lists, dialogs, and text editing fields. Furthermore, the UI component definition defines the behavior of these components in terms of actions or user commands that can be performed by the user on a specific component. For example, the definition may state that in order to select an item from a specific type of list, the user must press a certain button.

The UI structure definition defines the UI hierarchy of the terminal 4. It is based on terms of the components from the UI component definition. For example, the UI structure definition may state that a named menu component has a particular list of named items (components) of a particular type. In addition to the UI hierarchy, the structure definition also defines the structure of the state of the terminal 4. Often, the behavior of the terminal's UI depends on the state of the terminal 4, and hence it is necessary to model aspects of the physical terminals memory. Furthermore, the UI structure definition ties particular UI components to particular state elements, ensuring that the particular component can set or retrieve the current state.

With respect to the UI language definition, the static text strings used in the terminal's UI are separated from the UI component and UI structure definitions, making these definitions language-independent. This simplify the job of adding support for additional languages to the terminal model.

In dependence of given structure, the UI structural model and the UI component model are stored in one base per model of terminal 4. The UI language models are stored in one base per model of terminal 4 and per language.

With regard to the first data-base 14, there is one base for one standardasid scenario or operation F1 to Fn. The term "scenario" or standardised operation F1 to Fn covers in general of how a terminal operation or a terminal procedure common to all terminal types may be developed, based on a coherent and internally consistent data model (= the sequence model SM) of assumptions about interface properties of the terminals 4 as well as steps required to perform the various tasks or features (e.g. a scenario covers the general procedure of "WAP setup" or "Use of WAP" or "Use of calendar"). Shortly, a scenario is structured and stored by a standardised sequence of steps SQ1 to SQm or SS1 to SSz for usage functions or procedures enriched with terminal-specific interface or function information TM. For loading or generating the sequence of steps SQ1 to SQm or SS1 to SSZ, the information display system 12 comprises a generator module 24.

The sequence model SM defines the sequence of steps SQ1 to SQm and/or SS1 to SSz (e.g. key presses) needed to perform a particular task on a particular terminal 4. An example could be how to check for voice mail on a selected terminal 4, such as a terminal of one of the suppliers. The sequence model SM is based on the following data sources:
- the terminal model TM,
- a sequence description (e.g. text model FM),
- a set of parameters (e.g. user-specific parameters UM or interface-specific parameters IM), and/or
- a scenario description (e.g. text model FM).
   Given the terminal model TM, it is possible to determine how to perform particular operations on the terminal 4. More precisely, it is possible to determine the sequence of key presses needed to perform a particular operation (e.g. SS1 to SSz). For example, the terminal model TM can determine how to navigate from the root UI component to a particular edit field in the UI hierarchy, enter a particular text, and finally navigate to a new position.

Using the terminal model TM, scenarios or sequence models SM can be structured at a fairly high level of abstraction, i.e. it is not necessary to specify the exact sequence of key presses. In other words: Scenario definitions or sequence models SM consist of a number of steps (e.g. sequence of steps SQ1 to SQm), which may be consist of a number of operations (e.g. subsequent steps SS1 to SSz), which may be consist of a number of details. Each step represents a group of operations, which form a logical sub-scenario or sub-guidelines. An example of a step could be entering a voice mail dial-in number. To continue the example, this step could consist of the following operations:
- Navigate to the dial-in number's input field in the UI hierarchy.
- Delete any existing number found there.
- Enter the new number in the field.

The scenario description (typically) stops at the operation level. Using the terminal model TM, the information display system 12 breaks operations into sequences of details. A detail represents one or more key presses, typically on a single key. To continue the example, the navigation operation maybe consist of the following details:
- Press the "Down" key twice.
- Press the "Select" key.

In addition to steps and operations, the scenario descriptions or sequence models SM define so-called checkpoints or backup points at suitable points. A checkpoint indicates that the user should be asked to verify that they are on track.

Scenario descriptions need not be linear. They may contain branches, providing the user with multiple paths through the scenario. Furthermore, the scenario descriptions are parameterised (as is the terminal model). The parameters are used to isolate operator- or user-specific parameter or values (e.g. user-specific parameter UM or interface-specific parameter IM) from the scenario definitions themselves. This allows a scenario description to be reused for multiple operators and for multiple users.

In the previous example, the dial-in number could be an operator specific parameter, or it could be user-specific, especially end-user-specific. The information display system 12, also called guide engine, read the parameter set UM and/or IM from an input module 26 before generating the sequence model SM by the generator module 24. During generation, the parameter values UM, IM are used to expand operations into details.

A further aspect is the text model FM, which defines the textual contents of a particular guide in a particular language. The text model FM is based on two data sources:
- the sequence model SM and
- a language template LM.

The sequence model SM is generally language-independent. It expresses the sequence of details (e.g. SQ1 to SQm, SS1 to SSz) to be performed, but not in a textual formal suited for humans. To translate the sequence model SM to a textual representation, the information display system 12 uses a set of language-specific text models FM or templates LM, one for each type of step, operation and detail. The language template LM is not specific to a particular terminal or scenario. It is used across all scenarios F1 to Fn on all terminals 4.

In more detail, a language-specific template LM consists of static text combined with a number of placeholders. When building the guide text model FM, the information display system 12 substitutes the placeholders with concrete values obtained from the sequence model SM. An example of a placeholder could be the value typed into an input field.

In other words: The guide engine or information display system 12 traverses the sequence model SM and building a corresponding guide text model TM containing entries for each step, operation and detail in the scenario. This textual representation can subsequently be presented to the user 6 on an output module 28 via, e.g. an HTML browser as a text 2a on the i/o interface 8.

The above mentioned animation model AM defines more specifically the graphical contents of a particular guide. The animation model AM is constructed from two data sources:
- the sequence model SM and
- an animation template MM.

Said animation template MM defines parameterized building blocks needed to create animations of scenarios or functions F1 to Fn for a particular terminal 4. Animation building blocks often correspond to components defined in the UI component model. As an example, the UI component model may define the behavior of a selection list, whereas the animation template describes the visual representation of this particular list.

The information display system 12 builds animation models AM for scenarios F1 to Fn by combining animation building blocks into sequences (e.g. SQ1 to SQm, SS1 to SSz). The sequence of, and parameters for, the building blocks is obtained by traversing the sequence model SM.

Once the animation model AM has been constructed or generated, it can be presented to the user 6, through an animation player, e.g. Macromedia Flash Player on said output module 28.

### Drawing reference list

- 1: flow chart
- 2: technical information
- 2a: technical information in text form
- 2b: technical information as a graphic animation
- 4: computerized terminal
- 6: user
- 8: input/output interface
- 8a to 8e: input/output parts
- 10: control button
- 10a: user command button
- 12: information display system
- 14: first data-base
- 16: second data-base
- 18: third data-base
- 20: fourth data-base
- 22: input module
- 22a, b: sub-modules
- 24: generator module
- 26: input module
- 28: output module

- AM: animation model
- F1 to Fn: standardised operations (= szenarios)
- FM: textmodel
- I: input data
- IM: interface-specific information
- LM: language template
- MM: animation template
- SM: sequence models
- SQ1 to SQm: sequence of steps
- SS1 to SSZ: subsequent steps
- TM: terminal models
- UM: user-specific information

## Claims

1. Method for automatically providing technical information (2) of a computerized terminal (4), especially of a mobile phone, to a user (6), comprising the steps of:
- in dependence of input data (I), identifying one of a multitude of terminal types,
- in dependence of the identified terminal (4), identifying one of a multitude of standardised operations (F1 to Fn),
- in dependence of the operations (F1 to Fn) as identified, loading and displaying a sequence of steps (SQ1 to SQm, SS1 to SSz) characteristic for the execution of the identified operations (F1 to Fn) on the identified terminal (4),
- for a number of selected steps (SQ1 to SQm, SS1 to SSz), loading terminal-specific information (TM).

2. Method according to claim 1, wherein in a number of selected step (SQ1 to SQm, SS1 to SSz) additional, user-specific information (UM) and/or interface-specific information (IM) is loaded.

3. Method according to claim 1 or 2, wherein in a number of steps, terminal-specific information (TM) relevant for said step (SQ1 to SQm, SS1 to SSz) is displayed.

4. Method according to claim 3, wherein said terminal-specific information (TM) is at least partly displayed as an animation sequence (2b).

5. Method according to claim 3 or 4, wherein said terminal-specific information (TM) is at least partly displayed in a text form (2a).

6. Method according to claim 5 in combination with 4, wherein displaying of said animation sequence (2b) is synchronized with displaying of said text (2a).

7. Method according to one of claims 1 to 6, wherein in said sequence of steps (SQ1 to SQm, SS1 to SSz), for a number of selected steps (SQ1 to SQm, SS1 to SSz) a number of backup points is provided.

8. Method according to claim 7, wherein while carrying out the sequence of steps (SQ1 to SQm, SS1 to SSz), the passing of backup points is monitored.

9. Method according to claim 7 or 8, wherein on input failure or system failure, the execution of the sequence of steps (SQ1 to SQm, SS1 to SSz) is reset to the most recent backup point that was properly passed.

10. Method according to one of claims 7 to 9, wherein a user-controlled reset option (10a) is provided in order to reset the execution of the sequence of steps (SQ1 to SQm, SS1 to SSz) to the most recent backup point that was properly passed on user demand.

11. An information display system (12) for automatically providing technical information (2) of a computerized terminal (4), especially of a mobile phone, to a user (6), comprising:
- a plurality of data-bases (14,16) with following structure:
○ a first data-base (14) for storing a multitude of standardised operations (F1 to Fn),
○ a second data-base (16) for storing terminal-specific information (TM) for a multitude of terminal types (4),
- an input module (22) for identifying one of said multitude of terminal types (4) in dependence of input data (I) and one of a multitude of standardised operations (F1 to Fn) in dependence of the identified terminal (4),
- in dependence of the identified function (F1 to Fn), a generator module (24) for loading a sequence of steps (SQ1 to SQm, SS1 to SSz) characteristic for the execution of the identified function (F1 to Fn), and
- an output module (28) for carrying out said sequence of steps (SQ1 to SQm, SS1 to SSz), said output being programmed such that in each step (SQ1 to SQm, SS1 to SSz) terminal-specific information (TM) is loaded.

12. An information display system according to claim 11, wherein said generator module (24) provides a number of backup points for a number of selected steps (SQ1 to SQm, SS1 to SSz) in said sequence of steps (SQ1 to SQm, SS1 to SSz).

13. An information display system according to claim 12, wherein said output module (28) is programmed such that in each step (SQ1 to SQm, SS1 to SSz) the passing of backup points is monitored.

14. An information display system according to claim 12 or 13, wherein an terminal independent interface (8) comprises a user-controlled reset option (10a) in order to reset the execution of the sequence of steps (SQ1 to SQm, SS1 to SSz) to the most recent backup point that was properly passed.

15. Use of information display system (12) according to claim 14 for automatically providing technical information (2) of a computerized terminal (4), especially of a mobile phone, to a user (6).
